# EUROPEAN PATENT SPECIFICATION

(11) **EP 2 216 523 B1**
(45) Date of publication and mention of the grant of the patent: **07.06.2017**
(21) Application number: 09723017.1
(22) Date of filing: 11.03.2009
(51) Int. Cl.: F01N 3/08, B01D 53/86, F01N 3/20, F01N 3/24, F02D 25/00

(54) **LOW-TEMPERATURE-ACTUATED DENITRATION DEVICE FOR DIESEL ENGINE**
BEI NIEDRIGER TEMPERATUR BETÄTIGTE DENITRIERUNGSVORRICHTUNG FÜR DIESELMOTOR
DISPOSITIF DE DÉNITRIFICATION ACTIONNÉ À BASSE TEMPÉRATURE POUR MOTEUR DIESEL

(30) Priority: 18.03.2008 JP 2008069251
(43) Date of publication of application: 11.08.2010
(73) Proprietor: Mitsubishi Heavy Industries, Ltd., Tokyo 108-8215 (JP)
(72) Inventor: HIRAOKA, Naohiro, Kobe-shi Hyogo 652-8585 (JP); MIYANAGI, Akihiro, Kobe-shi Hyogo 652-8585 (JP); WAKATSUKI, Yuji, Kobe-shi Hyogo 652-8585 (JP)
(74) Representative: Hoffmann Eitle
(86) International application number: PCT/JP2009/055220
(87) International publication number: WO 2009/116549

(56) References cited:
- WO-A1-2005/054657
- WO-A1-2006/092392
- JP-A- 2000 110 643
- JP-A- 2000 186 531
- JP-A- 2000 186 531
- JP-A- 2003 120 269
- JP-A- 2006 077 608
- JP-A- 2006 258 058
- JP-A- 2006 274 934

## Description

### BACKGROUND OF THE INVENTION

### Field of the Invention

The present invention relates to a NOx reduction device (a denitration device) for low temperature exhaust gas emitted from a large marine diesel engine; more concretely, the invention relates to a refreshing device as to the catalyst (for Selective Catalytic Reduction) used in the NOx reduction device; thereby, the exhaust gas passage from the diesel engine is diverted into a plurality of branched gas passages; each branched passage is provided with the NOx reduction device, the NOx reduction catalyst therein, and an open-close valve for closing and opening the branched passage; and, the NOx in the exhaust gas can be reduced in the presence of the NOx reduction catalyst under a condition that the temperature of the exhaust gas is equal to or lower than 300°C.

### Description of the Related Art

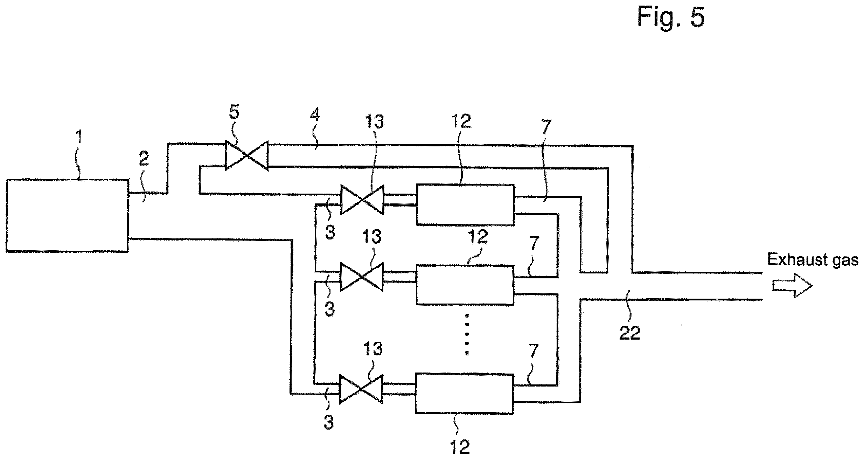

Fig. 5 shows an example of a low-temperature-operated (a low temperature activated, or a low temperature actuated) NOx reduction device for a marine large diesel engine; whereby, the NOx in the exhaust gas emitted from the engine can be reduced in the presence of the NOx reduction catalyst, even when the temperature of the exhaust gas is equal to or lower than a predetermined temperature. In Fig. 5, the numeral 1 denotes a diesel engine; a main exhaust gas passage 2 is diverted into a plurality of exhaust gas branched-passages 3; each exhaust gas passage 3 is provided with a NOx reduction device 12; in each passage 3 before the NOx reduction device 12 and the catalyst therein, an open-close valve 13, is provided. The numeral 4 shows an exhaust gas bypass passage through which the exhaust gas emitted from the diesel engine into the main exhaust gas passage 2 can bypass the branched-passages 3 and flow into an exhaust gas outlet (funnel) 22; the exhaust gas bypass passage 4 is provided with a bypass valve 5 for making a part of the exhaust gas emitted from the diesel engine bypass the NOx reduction devices. The numeral 7 shows an exhaust gas passage after each NOx reduction device (the gas outlet passage for each NOx reduction device).

In the field of diesel engines such as the lower exhaust gas temperature marine large diesel engine, the exhaust gas temperature is usually equal to or lower than 300°C; therefore, acid ammonium sulfate (due to a chemical reaction between the S component derived from the heavy fuel oil emitted from the engine in the exhaust gas, and the aqueous ammonia sprayed into the exhaust gas) is formed on the surface of the catalyst in the NOx reduction (SCR); the acid ammonium sulfate poisons the surface catalyst, spoiling the function of the catalyst. As a result, the denitriation rate (or denitrification rate, or NOx reduction efficiency) is deteriorated; however, the acid ammonium sulfate formed on the catalyst surface can be removed by heating-up the catalyst or the exhaust gas around the catalyst. This heating-up process is called a refreshing process (or simply refreshing).

In the marine large diesel engine as described above, the exhaust gas temperature after the turbine of the exhaust gas turbocharger is equal to or lower than 300°C; thus, in the NOx reduction device of the SCR, there is a difficulty that the acid ammonium sulfate is formed on the catalyst surface, and the acid ammonium sulfate poisons the catalyst. Thus, a measure to reduce the acid ammonium sulfate on the catalyst surface is needed; the basic measure to cope with this difficulty is to heat-up the catalyst so that the acid ammonium sulfate is removed from the catalyst.

As a countermeasure to evade the denitriation rate deterioration due to the acid ammonium sulfate poisoning, a technology for increasing the exhaust gas temperature by means of the after-burning of the exhaust gas for the purpose of the catalyst refreshment has been proposed.

For instance, the patent reference 1 (JP1993-285343) discloses a technology regarding a NOx reduction device, aiming at providing a SCR type device that can be used for the diesel engines emitting the low temperature exhaust gas, the diesel engines including marine two stroke cycle diesel engines. The proposed NOx reduction device has a body casing in which gas containing ammonia flows; the inside space of the body casing is divided into a plurality of gas passages by use of heat insulation partitions; each gas passage is provided with an inlet gas damper and an outlet gas damper; in each gas passage, a catalyst unit is housed; a high temperature use gas nozzle with an open-close valve is provided between the inlet gas damper and the catalyst unit; the gas containing ammonia flows by the side of the catalyst in a case where the inlet and outlet gas dampers are opened; a high temperature gas flows through each gas passage and heats the catalyst in a case where the inlet and outlet gas dampers are closed and the open-close valve of the high temperature use gas nozzle is opened.

However, the disclosed NOx reduction device has to be provided with a plurality of gas passages as divided spaces in the body casing as well as the inlet gas damper in each gas passage, the catalyst unit in each passage, and the high temperature use gas nozzle with an open-close valve in each passage; further, the gas containing ammonia flow and the high temperature gas flow are changed-over each other by operating the open-close valve as well as the inlet gas damper; thus, the device configuration is complicate and the manufacturing cost becomes higher.

In addition, in the patent reference 1, there is a disclosure regarding the exhaust temperature control only for a main diesel engine; no mention is made of a combination system including a main diesel engine and another additional diesel engine.

Also, reference may be made to EP 1 013 904 A2 and JP 2006-258058 A, which disclose internal combustion engines having NOx catalysts and heating means, as well as WO 2006/092392 A1 and WO 2005/054657 A1, which disclose combining an engine with a catalytic reformer.

### SUMMARY OF THE INVENTION

In view of the subjects to be overcome as to the former technology as described above, the present invention aims at providing a low-temperature-activated NOx reduction device for a marine large diesel main-engine that emits the exhaust gas of a low temperature, the NOx reduction device being provided with a catalyst refreshment means for refreshing the performance of the catalyst that is deteriorated due to the formed acid ammonium sulfate; thereby the catalyst refreshment means can be realized without spoiling manufacturing cost effectiveness by combining the main diesel engine with another diesel engine.

In order to reach the goal for the above-described subjects, the present invention is as defined in the appended claims.

According to the present invention, the exhaust gas and the waste heat thereof from the auxiliary diesel engine provided besides the main diesel engine (in the ship) can be made use of in refreshing the low-temperature-activated NOx reduction catalyst for the main diesel engine by means of the controller (that controls the openings of the first open-close valve provided on each of the branch passages as well as of the second open-close valve provided on each of the communicating passages (auxiliary diesel engine exhaust gas passages) connecting the auxiliary engine exhaust gas outlet with each one of the branch passage) ; thereby, the temperature of the exhaust gas from the auxiliary diesel engine is always higher than the temperature of the exhaust gas from the main diesel engine.

In this way (according to the provided catalyst refreshment means), the deteriorated performance due to the acid ammonium sulfate regarding the low-temperature-activated NOx reduction catalyst can be refreshed by heating the catalyst, with a simple and low cost device in which additional components such as the communicating passage that transfers the exhaust gas from the auxiliary diesel engine to the NOx reduction catalyst are simply provided.

Further, the controller together with the means for refreshing the low-temperature- activated NOx reduction catalyst for the main diesel engine may be configured so that the refreshment of the catalyst is performed by use of the waste heat of the exhaust gas from not only the main diesel engine but also the auxiliary diesel engine (the diesel generator engine) that is provide besides the main diesel engine, in a case when the deteriorated performance is detected in response to the reduced difference between the NOx concentration value detected by the inlet side NOx concentration meter and the NOx concentration value detected by the outlet side NOx concentration meter of each NOx reduction catalyst.

Further, the controller may be configured so that the refreshment of the catalyst is performed by opening the second open-close valve and supplying the exhaust gas from the auxiliary diesel engine into each NOx reduction catalyst, in a case when the deteriorated performance is detected in response to the reduced exhaust gas temperature detected by the outlet side temperature sensor of each NOx reduction catalyst, under the premise that the difference between the exhaust gas temperature detected by the inlet side temperature sensor and the exhaust gas temperature detected by the outlet side temperature sensor of each NOx reduction catalyst is monitored.

Further, the controller may be configured so that the refreshment of the catalyst is automatically performed in a case when the counted accumulative revolution number counted by the revolution counter reaches a prescribed refreshing revolution number.

In each of the above preferable controller configurations, the currently used detectors (meters, sensors or counters) can be made use of so that the low-temperature-activated (or operated) NOx reduction device can be simple and cost effective.

Moreover, the controller may be configured so that the refreshment of the catalyst is performed by opening each second open-close valve as well as supplying the exhaust gas from the auxiliary diesel engine into each NOx reduction catalyst, in turn every time the revolution counter counts a predetermined count number increment, under the premise that the main diesel engine is provided with a revolution counter (an accumulative revolution counter).

Thus, the refreshment of the catalyst can be performed in a simpler way, so long as the revolution count number increment is pertinently set in advance.

### BRIEF DESCRIPTION OF THE DRAWINGS

Fig. 1 shows a whole configuration of a low-temperature-activated NOx reduction device aiming at marine large diesel engines, according to an embodiment (an overall embodiment) of the present invention;
Fig. 2 shows a control block diagram for the low-temperature-activated NOx reduction device, according to a second embodiment of the present invention;
Fig. 3 shows a control block diagram for the low-temperature-activated NOx reduction device, according to a third embodiment of the present invention;
Fig. 4 shows a control block diagram for the low-temperature-activated NOx reduction device, according to a fourth embodiment of the present invention;
Fig. 5 shows an example of a low-temperature-activated NOx reduction device as a whole configuration conventionally used in a marine large diesel engine.

### DETAILED DESCRIPTION OF THE PREFERRED EMBODIMENTS

Hereafter, the present invention will be described in detail with reference to the embodiments shown in the figures. However, the dimensions, materials, shape, the relative placement and so on of a component described in these embodiments shall not be construed as limiting the scope of the invention thereto, unless especially specific mention is made.

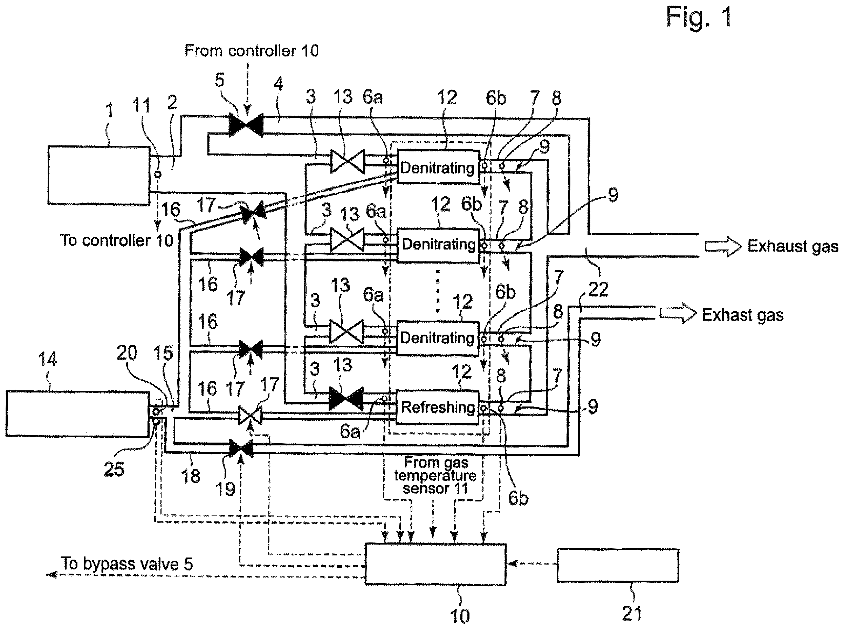

Fig. 1 shows a whole configuration of a low-temperature-activated NOx reduction device aiming at marine large diesel engines, according to an embodiment (an overall embodiment) of the present invention.

### (First Embodiment)

In Fig. 1, the numeral 1 denotes a main diesel engine, and the numeral 2 denotes an exhaust gas main-passage which is diverted into a plurality of exhaust gas passages 3; each of the exhaust gas passages is provided with NOx reduction catalyst 12 which is opened and closed by an open-close valve 13. In addition, the temperature of the exhaust gas at the inlet of the NOx reduction catalyst 12 is usually at a level of 300°C or less.

The numeral 4 denotes an exhaust gas bypass passage through which the exhaust gas from the exhaust gas main-passage 2 bypasses the NOx removal catalyst 12 into an exhaust gas outlet 22. A bypass valve 5 is provided in the exhaust gas bypass passage 4. The numeral 7 denotes an exhaust gas outlet passage of the NOx reduction catalyst 12; each exhaust gas outlet passage 7 joins the exhaust gas outlet 22 with the exhaust gas bypass passage 4.

In addition, a damper 9 for opening and closing the exhaust gas outlet passage 7 is provided in each of the exhaust gas outlet passages 7.

The numeral 14 denotes an auxiliary diesel engine; a plurality of the auxiliary diesel engine sets is usually installed in a ship besides the main diesel engine. The exhaust gas temperature of the auxiliary diesel engine 14 is controlled to be higher (around 350°C) than the temperature of the NOx reduction catalyst 12 .

In this embodiment, the numeral 10 denotes a controller for opening/closing an open-close valve 17 provided in an exhaust gas passage 16 for opening and closing the exhaust gas passage 16; thereby the open-close valve 17 is opened by the controller 10 so that the higher temperature exhaust gas (of around 350 °C) from the auxiliary diesel engine 14 flows to the NOx reduction catalyst 12, of which the inlet temperature of the exhaust gas is at most 300°C, through the exhaust gas passage 16.

Further, the numeral 18 denotes an exhaust gas bypass passage through which the exhaust gas from the auxiliary diesel engine 14 bypasses the NOx reduction catalyst 12 and joins the exhaust gas outlet (a collecting outlet) 22. In addition, a exhaust gas bypass valve 19 is provided in the exhaust gas bypass passage 18.

Thus, as shown in Fig. 1, the controller 10, for the case when the NOx reduction catalyst 12 being refreshed (cf. the catalyst 12 at the lower most in Fig. 1), opens the open-close valve 17 which is for opening and closing the exhaust gas passage 16 while the open-close valve 13 of the NOx reduction catalyst 12 is closed, so that the higher temperature exhaust gas (of around 350°C) from the auxiliary diesel engine 14 is supplied to the catalyst 12 for refreshing the catalyst 12. In addition, the numeral 21 denotes a revolution counter that is connected to the controller 10.

According to the embodiment as described above, the exhaust gas and the waste heat from the auxiliary diesel engine 14 which is provided besides the main diesel engine 1 (in the ship) can be used in refreshing the low-temperature-activated NOx reduction catalyst 12 for the main diesel engine by means of the controller 10; thereby, the temperature of the exhaust gas (around 350°C) from the auxiliary diesel engine 14 is always higher than the temperature of the exhaust gas from the main diesel engine 1.

Accordingly, the deteriorated performance due to the acid ammonium sulfate regarding the low-temperature-activated NOx reduction catalyst 12 can be refreshed by heating the catalyst 12, with a simple and low cost device in which additional components such as the exhaust gas passage 16 that transfers the exhaust gas from the auxiliary diesel engine 14 to the NOx reduction catalyst 12 are simply provided.

### (Second Embodiment)

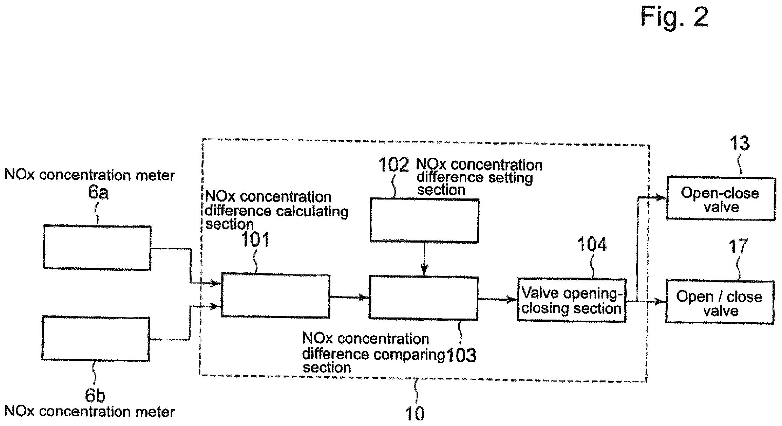

Fig. 2 shows a control block diagram for the low-temperature-activated NOx reduction device, according to a second embodiment of the present invention.

In Fig. 2 as well as in Fig. 1 already explained above, a NOx concentration meter 6a and a NOx concentration meter 6b are provided at the inlet and outlet of the NOx reduction catalyst 12, respectively. The NOx concentration values (signals) detected by the meters 6a and 6b are inputted into the controller 10.

In Fig. 2, a NOx concentration difference calculating section 101 in the controller 10 calculates the difference as to the NOx concentration values between the detected values (signals) detected by the meters 6a and 6b, and inputs the calculated NOx concentration difference into a NOx concentration difference comparing section 103.

Further, the numeral 102 denotes a NOx concentration difference setting section in which an allowable limit, namely, the catalyst function deterioration threshold as the NOx concentration difference between the detected values (signals) detected by the meters 6a and 6b is prescribed. In the NOx concentration difference comparing section 103, the calculated difference is compared with the allowable limit; and, when the calculated difference is smaller than the prescribed allowable limit, an operation start signal is transmitted from the NOx concentration difference comparing section 103 to the open-close valve 17 via a valve opening-closing section 104. When this happens, the open-close valve 13 needs to be closed.

In receiving the operation start signal, the open-close valve 17 opens so that the higher temperature exhaust gas from the auxiliary diesel engine 14 is supplied to the NOx reduction catalyst 12 that corresponds to the valve 17.

Thus, according to the second embodiment as described above, by means of the control of the controller 10, the higher temperature exhaust gas from the auxiliary diesel engine 14 can be supplied to the NOx reduction catalyst 12 so as to refresh the catalyst 12, in a case when the function of the catalyst is deteriorated and the calculated difference becomes smaller than the prescribed allowable limit.

### (Third Embodiment)

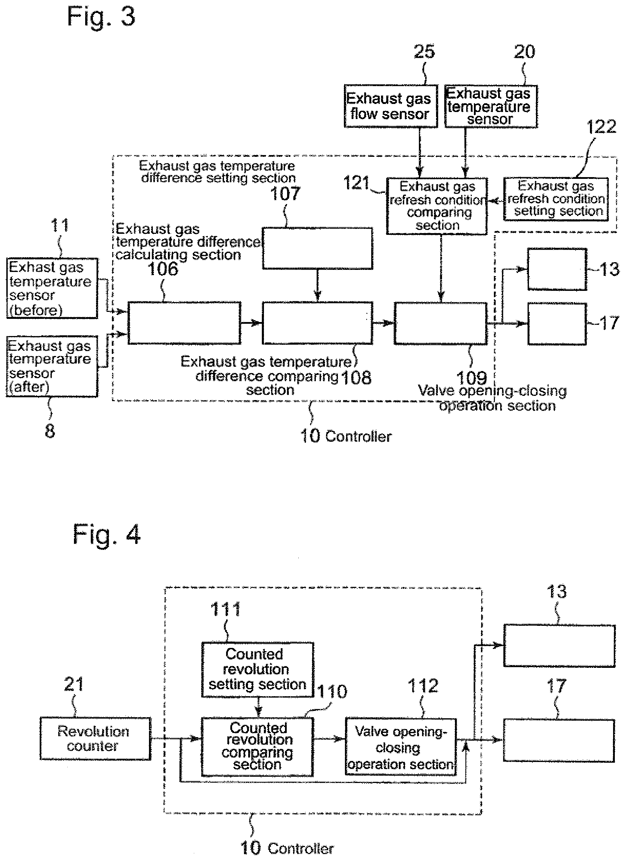

Fig. 3 a control block diagram for the low-temperature-activated NOx reduction device, according to a third embodiment of the present invention.

In Fig. 3 as well as the Fig. 1 as already referred to, the numeral 11 denotes an exhaust gas temperature sensor that detects the temperature of the exhaust gas before each catalyst, while the numeral 8 denotes an exhaust gas temperature sensor that detects the temperature of the exhaust gas after each catalyst; the temperature values (signals) detected by the sensors 11 and 8 are into an exhaust gas temperature difference calculating section 106.

The numeral 107 denotes an exhaust gas temperature difference setting section. An allowable temperature difference that indicates that the temperature before the catalyst 12 is excessively low, namely, an exhaust gas temperature difference that gives a criterion whether or not the catalyst needs the supply of the higher temperature exhaust gas from the auxiliary diesel engine 14, is prescribed in the exhaust gas temperature difference setting section 107.

In an exhaust gas temperature difference comparing section 108 in Fig. 3, the calculated temperature difference calculated in the section 106 is compared with the allowable temperature difference established in the section 107, so that an information signal indicating that the exhaust gas should be supplied to the catalyst is inputted into a valve opening-closing operation section 109 in Fig. 3, when calculated temperature difference is greater than the allowable temperature difference.

In this embodiment as depicted in Fig. 3, an exhaust gas flow rate sensor 25 for detecting the flow rate of the exhaust gas from the auxiliary diesel engine 14 and an exhaust gas temperature sensor 20 for sensing the exhaust gas temperature are provided at the exhaust gas main-passage 15 (cf. Fig. 1). The detected values (signals) of the gas flow rate as well as the detected values (signals) of the exhaust gas temperature are transmitted to an exhaust gas refresh-condition comparing section 121 in the controller 10, as shown in Fig. 3. Further, the controller 10 is provided with an exhaust gas refresh-condition setting section 122 into which an allowable (limit) gas flow rate as well as an allowable (limit) gas temperature are prescribed (inputted in advance). As to the gas flow rate and the gas temperature, the detected values (signals) are compared with the allowable limits in the exhaust gas refresh condition comparing section 121. Receiving the above-described information from the section 121, the valve opening-closing operation section 109 transmits an operation start signal toward the open-close valve 17 so as to open the valve 17 when the detected exhaust gas temperature reaches the allowable limit prescribed in the section 122, and the calculated temperature difference calculated in the exhaust gas temperature difference calculating section 106 exceeds the allowable limit difference prescribed in the exhaust gas temperature difference setting section 107.

In receiving the operation start signal regarding the opening operation, the open-close valve 17 opens and the open-close valve 13 is closed, so that the higher temperature exhaust gas from the auxiliary diesel engine 14 is supplied to the NOx reduction catalyst 12.

According to the third embodiment as described above, the controller 10 monitors the exhaust gas temperatures before and after the catalyst as well as the exhaust gas flow rate. the controller 10 makes the open-close valve 17 open so that the higher temperature exhaust gas from the auxiliary diesel engine 14 is supplied to the NOx reduction catalyst 12, when the temperature after the catalyst becomes lower than the temperature before the catalyst, and the detected value as to the exhaust gas flow rate has reached the prescribed allowable limit. In this way, the NOx reduction catalyst 12 can be refreshed.

### (Fourth Embodiment)

Fig. 4 shows a control block diagram for the low-temperature-activated NOx reduction device, according to a fourth embodiment of the present invention.

In Fig. 4 as well as the Fig. 1 as already referred to, a revolution counter 21 for counting the number of accumulative revolution as to the main diesel engine is provided; the number of accumulative revolution counted by the counter 21 is transmitted to the controller 10.

In the controller 10, a counted revolution setting section 111 is provided; the section 111 memorizes a plurality of refreshing revolution numbers at which each catalyst is to be refreshed. Further, a counted revolution comparing section 110 compares the number of accumulative revolution counted by the revolution counter 21 with the prescribed refreshing revolution numbers; and, the compared result is inputted into the valve opening-closing operation section 112.

The valve opening-closing operation section 112 sends an order signal toward the valve 17 so as to open the valve 17, when the counted accumulative revolution number counted by the revolution counter 21 reaches a prescribed refreshing revolution number, and, the corresponding valve 17 opens so that the corresponding catalyst 12 is refreshed. When this happens, the open-close valve 13 is closed.

According to the fourth embodiment as described above, the valve opening-closing operation section 112 automatically makes the open-close valve 17 open, in a case when the counted accumulative revolution number counted by the revolution counter 21 reaches a prescribed refreshing revolution number; thus, the embodiment can realize an extremely simple operation of the NOx reduction device.

### (Fifth Embodiment)

The opening and closing control as to the open-close valves 13 and 17 may be performed every time the revolution counter 21 counts a predetermined count number increment; namely, each open-close valve 13 on each branched exhaust gas passage line 3 and the open-close valve 17 on the exhaust gas passage line 16 may be controlled so as to open and close in turn; more concretely, the NOx reduction catalysts 12 may be refreshed in turn every time the revolution counter 21 counts a predetermined count number increment. Hereby, it is noted that the changeover operation (open to close) as to the valve 13 and the changeover operation (close to open) as to the valve 17 may be simultaneously performed; or, simply, only the changeover operation (close to open) as to the valve 17 may be performed.

According to the just above-described manner, a simpler refreshment of the NOx reduction catalyst can be executed, with a pertinent setting regarding the to-be-predetermined count number increment.

### Industrial Applicability

As described thus far, the present invention can provide an low-temperature-activated NOx reduction device for a marine large diesel main-engine that emits the exhaust gas of a low temperature, the NOx reduction device being provided with a catalyst refreshment means for refreshing the performance of the catalyst that is deteriorated due to the formed acid ammonium sulfate; thereby the catalyst refreshment means can be realized without spoiling manufacturing cost effectiveness by combining the main diesel engine with another diesel engine.

## Claims

1. A NOx reduction device suitable for reducing NOx from a lower temperature exhaust gas, said NOx reduction device being activatable at said lower temperature and having an exhaust gas main-passage (2) from a main diesel engine (1) of a ship diverted into a plurality of exhaust gas branch-passages (3) each of which is provided with a NOx reduction catalyst (12) and a first open-close valve (13) for closing and opening the branch-passage (3) through which the NOx reduction catalyst is controlled, thereby refreshment as to each of the NOx reduction catalysts (12) is selectively performed in response to the temperature level of the exhaust gas, wherein the NOx reduction device further comprises:
an auxiliary diesel engine (14), which is suitable for a power generation use and being provided in the ship besides the main diesel engine (1), and which is configured to emit a higher temperature exhaust gas than that of the main diesel engine (1), said higher temperature being set to exceed the temperature at which the NOx reduction catalyst can be refreshed,
a plurality of communicating passages (16) that respectively connect an exhaust passage (15) of the auxiliary diesel engine (14) and the plurality of the branch-passages (3) that are diverted from the exhaust gas main-passage (2), wherein each of said communicating passages (16) is provided with a second open-close valve (17);
an exhaust gas bypass passage through which the exhaust gas from the auxiliary diesel engine (14) bypasses the NOx reduction catalyst (12) and joins an exhaust gas outlet (22) and on which an exhaust gas bypass valve (19) is provided; and
a controller (10) configured to control the opening and closing operation of the first (13) and second (17) open-close valves when at least one of the NOx reduction catalysts (12) is to be refreshed, so that the higher temperature exhaust gas emitted from the auxiliary diesel engine (14) goes through said at least one NOx reduction catalyst (12) provided to the corresponding branch passage (3) via the corresponding second open-close valve (17), thereby increasing the temperature of said at least one NOx reduction catalyst (12) to a level enabling refreshment of said at least one NOx reduction catalyst (12).

2. The NOx reduction device according to claim 1, further comprising a plurality of NOx concentration meters (6a, 6b) respectively provided at an inlet side and an outlet side of each of the NOx reduction catalysts (12), wherein
the controller (10) is configured to calculate a difference between the NOx concentration value detected by the inlet side NOx concentration meter (6a) and the NOx concentration value detected by the outlet side NOx concentration meter (6b) of each NOx reduction catalyst (12), and, when the calculated difference is smaller than a prescribed allowable limit for at least one of the NOx reduction catalysts (12), to allow the second open-close valve (17) corresponding to said at least one NOx reduction catalyst to open so that the higher temperature exhaust gas from the auxiliary diesel engine (14) goes through said at least one NOx reduction catalyst (12) to perform the refreshment of said at least one NOx reduction catalyst.

3. The NOx reduction device according to claim 1, further comprising at least one inlet side exhaust gas temperature sensor (11) provided at an inlet side of the NOx reduction catalysts (12), and a plurality of outlet side exhaust gas temperature sensors (8) respectively provided at an outlet side of each of the NOx reduction catalysts (12) for detecting the temperature before and after each of the NOx reduction catalysts (12), wherein
the controller (10) is configured to calculate a difference between the temperature detected by the inlet side temperature sensor (11) and the temperature detected by the outlet side temperature sensor (8) of each NOx reduction catalyst (12), and when the calculated difference is greater than a prescribed allowable limit for at least one of the NOx reduction catalysts (12), to allow the second open-close valve (17) corresponding to said at least one NOx reduction catalyst to open so that the higher temperature exhaust gas from the auxiliary diesel engine (14) goes through said at least one NOx reduction catalyst (12) to perform the refreshment of said at least one NOx reduction catalyst (12).

4. The NOx reduction device according to claim 1, further comprising a revolution counter (21) for counting the accumulative revolution number of the main diesel engine (1), wherein
the controller (10) is configured to allow the second open-close valve (17) to open when the counted accumulative revolution number counted by the revolution counter (21) reaches a prescribed refreshing revolution number so that the higher temperature exhaust gas from the auxiliary diesel engine (14) goes through at least one of the NOx reduction catalysts (12) to perform the refreshment of said at least one NOx reduction catalyst (12).

5. The NOx reduction device according to claim 1, further comprising a revolution counter (21) for counting the accumulative revolution number of the main diesel engine (1), wherein
the controller (10) is configured to control the opening and closing of the first and second open-close valves (13, 17) provided at each exhaust gas branch passages in turn every time the revolution counter (21) counts a predetermined count number increment; thereby, the controller (10) allows the second open-close valves (17) to open in turn so that the higher exhaust gas from the auxiliary diesel engine (14) goes through the NOx reduction catalysts (12)in turn to perform refreshment thereof.

6. The NOx reduction device according to any one of the preceding claims, further comprising another exhaust bypass passage (4) through which the lower temperature exhaust gas from the main-passage (2) can bypass the NOx reduction catalysts (12) into the exhaust gas outlet (22); another bypass valve (5) provided in said other exhaust bypass passage (4); and a plurality of exhaust gas outlet passages (7) for exhausting gas from each of the NOx reduction catalysts (12), respectively, wherein each of the exhaust gas outlet passages (7) joins the exhaust gas outlet (22) with said other exhaust bypass passage (4).

## Patentansprüche

1. NOx-Reduktionsvorrichtung, die sich zum Reduzieren von NOx in einem Abgas mit niedrigerer Temperatur eignet, wobei sich die NOx-Reduktionsvorrichtung bei der niedrigeren Temperatur aktivieren lässt und einen Abgas-Hauptdurchlass (2) von einem Hauptdieselmotor (1) eines Schiffes aufweist, der in eine Vielzahl von Abgas-Zweigdurchlässen (3) abgezweigt wird, von denen jeder mit einem NOx-Reduktionskatalysator (12) und einem ersten Auf-Zu-Ventil (13) zum Schließen und Öffnen des Zweigdurchlasses (3) versehen ist, durch das der NOx-Reduktionskatalysator gesteuert wird, wodurch eine Auffrischung hinsichtlich jedes der Reduktionskatalysatoren (12) selektiv als Reaktion auf das Temperaturniveau des Abgases durchgeführt wird, wobei die NOx-Reduktionsvorrichtung darüber hinaus Folgendes umfasst:
einen Hilfsdieselmotor (14), der sich zum Gebrauch einer Stromerzeugung eignet und im Schiff neben dem Hauptdieselmotor (1) bereitgestellt wird, und der konfiguriert ist, um ein Abgas mit höherer Temperatur auszustoßen, als jenes des Hauptdieselmotors (1), wobei die höhere Temperatur eingestellt ist, um die Temperatur zu überschreiten, bei welcher der NOx-Reduktionskatalysator aufgefrischt werden kann,
eine Vielzahl von miteinander verbundenen Durchlässen (16), die jeweils einen Abgasdurchlass (15) des Hilfsdieselmotors (14) mit der Vielzahl von Zweigdurchlässen (3) verknüpfen, die aus dem Abgas-Hauptdurchlass (2) abgezweigt werden, wobei jeder der miteinander verbundenen Durchlässe (16) mit einem zweiten Auf-Zu-Ventil (17) versehen ist;
einen Abgas-Bypass-Durchlass, durch den das Abgas vom Hilfsdieselmotor (14) den NOx-Reduktionskatalysator (12) umgeht und einem Abgas-Auslass (22) zugeführt wird und auf dem ein Abgas-Bypass-Ventil (19) bereitgestellt wird; und
einen Regler (10), der konfiguriert ist, um den Öffnungs- und den Schließvorgang des ersten (13) und zweiten (17) Auf-Zu-Ventils zu steuern, wenn zumindest einer der NOx-Reduktionskatalysatoren (12) aufzufrischen ist, sodass das Abgas mit der höheren Temperatur, das vom Hilfsdieselmotor (14) ausgestoßen wird, über das entsprechende zweite Auf-Zu-Ventil (17) durch den zumindest einen NOx-Reduktionskatalysator (12) strömt, der im entsprechenden Zweigdurchlass (3) bereitgestellt wird, wodurch die Temperatur des zumindest einen NOx-Reduktionskatalysators (12) auf ein Niveau angehoben wird, welches das Auffrischen des zumindest einen NOx-Reduktionskatalysators (12) ermöglicht.

2. NOx-Reduktionsvorrichtung nach Anspruch 1, darüber hinaus eine Vielzahl von NOx-Konzentrationsmessern (6a, 6b) umfassend, die jeweils auf einer Einlassseite und einer Auslassseite eines jeden der NOx-Reduktionskatalysatoren (12) bereitgestellt werden, wobei
der Regler (10) konfiguriert ist, um einen Unterschied zwischen dem NOx-Konzentrationswert, der durch den einlassseitigen NOx-Konzentrationsmesser (6a) erfasst wird, und dem NOx-Konzentrationswert, der durch den auslassseitigen NOx-Konzentrationsmesser (6b) eines jeden NOx-Reduktionskatalysators (12) erfasst wird, zu berechnen und, wenn der berechnete Unterschied kleiner ist, als ein vorgeschriebener zulässiger Grenzwert für zumindest einen der NOx-Reduktionskatalysatoren (12), es dem zweiten Auf-Zu-Ventil (17) entsprechend dem zumindest einen NOx-Reduktionskatalysator zu erlauben, sich zu öffnen, sodass das Abgas mit der höheren Temperatur aus dem Hilfsdieselmotor (14) durch den zumindest einen NOx-Reduktionskatalysator (12) strömt, um die Auffrischung des zumindest einen NOx-Reduktionskatalysators durchzuführen.

3. NOx-Reduktionsvorrichtung nach Anspruch 1, darüber hinaus zumindest einen einlassseitigen Abgas-Temperatursensor (11) umfassend, der an einer Einlassseite der NOx-Reduktionskatalysatoren (12) bereitgestellt wird, sowie eine Vielzahl von auslassseitigen Abgas-Temperatursensoren (8), die jeweils an einer Auslassseite eines jeden der NOx-Reduktionskatalysatoren (12) bereitgestellt werden, um die Temperatur vor und nach jedem der NOx-Reduktionskatalysatoren (12) zu erfassen, wobei
der Regler (10) konfiguriert ist, um einen Unterschied zwischen der Temperatur, die durch den einlassseitigen Temperatursensor (11) erfasst wird, und der Temperatur, die durch den auslassseitigen Temperatursensor (8) eines jeden NOx-Reduktionskatalysators (12) erfasst wird, zu berechnen und, wenn der berechnete Unterschied größer ist, als ein vorgeschriebener zulässiger Grenzwert für zumindest einen der NOx-Reduktionskatalysatoren (12), es dem zweiten Auf-Zu-Ventil (17) entsprechend dem zumindest einen NOx-Reduktionskatalysator zu erlauben, sich zu öffnen, sodass das Abgas mit der höheren Temperatur aus dem Hilfsdieselmotor (14) durch den zumindest einen NOx-Reduktionskatalysator (12) strömt, um die Auffrischung des zumindest einen NOx-Reduktionskatalysators (12) durchzuführen.

4. NOx-Reduktionsvorrichtung nach Anspruch 1, darüber hinaus einen Umdrehungszähler (21) zum Zählen der kumulativen Umdrehungszahl des Hauptdieselmotors (1) umfassend, wobei
der Regler (10) konfiguriert ist, um es dem zweiten Auf-Zu-Ventil (17) zu erlauben, sich zu öffnen, wenn die gezählte kumulative Umdrehungszahl, die durch den Umdrehungszähler (21) gezählt wird, eine vorgeschriebene Auffrischungsumdrehungszahl erreicht, sodass das Abgas mit der höheren Temperatur aus dem Hilfsdieselmotor (14) durch zumindest einen der NOx-Reduktionskatalysatoren (12) strömt, um die Auffrischung des zumindest einen NOx-Reduktionskatalysators (12) durchzuführen.

5. NOx-Reduktionsvorrichtung nach Anspruch 1, darüber hinaus einen Umdrehungszähler (21) zum Zählen der kumulativen Umdrehungszahl des Hauptdieselmotors (1) umfassend, wobei
der Regler (10) konfiguriert ist, um das Öffnen und Schließen des ersten und zweiten Auf-Zu-Ventils (13, 17), die an jedem der Abgas-Zweigdurchlässe bereitgestellt werden, der Reihe nach jedes Mal zu steuern, wenn der Umdrehungszähler (21) ein vorbestimmtes Zählwertinkrement zählt; wodurch es der Regler (10) den zweiten Auf-Zu-Ventilen (17) erlaubt, sich der Reihe nach zu öffnen, sodass das Abgas mit der höheren Temperatur aus dem Hilfsdieselmotor (14) durch die NOx-Reduktionskatalysatoren (12) strömt, um der Reihe nach die Auffrischung davon durchzuführen.

6. NOx-Reduktionsvorrichtung nach einem der vorhergehenden Ansprüche, darüber hinaus einen weiteren Abgas-Bypass-Durchlass (4) umfassend, durch den das Abgas mit niedrigerer Temperatur aus dem Hauptdurchlass (2) die NOx-Reduktionskatalysatoren (12) in den Abgas-Auslass (22) umgehen kann; ein weiteres Bypass-Ventil (5), das im weiteren Abgas-Bypass-Durchlass (4) bereitgestellt wird; und eine Vielzahl von Abgas-Auslassdurchlässen (7) zum Ausstoßen von Gas jeweils aus jedem der NOx-Reduktionskatalysatoren (12), wobei jeder der Abgas-Auslassdurchlässe (7) den Abgas-Auslass (22) mit dem weiteren Abgas-Bypass-Durchlass (4) verbindet.

## Revendications

1. Dispositif de réduction de NOx approprié pour réduire le NOx provenant d'un gaz d'échappement à température inférieure, ledit dispositif de réduction de NOx pouvant être activé à ladite température inférieure et ayant un passage principal de gaz d'échappement (2) à partir d'un moteur diesel principal (1) d'un navire dévié en une pluralité de passages d'embranchement de gaz d'échappement (3) dont chacun est doté d'un catalyseur de réduction de NOx (12) et d'une première soupape d'ouverture/fermeture (13) pour fermer et ouvrir le passage d'embranchement (3) par l'intermédiaire de laquelle le catalyseur de réduction de NOx est commandé, la régénération de chacun des catalyseurs de réduction de NOx (12) est ainsi réalisée de manière sélective en réponse au niveau de température du gaz d'échappement, dans lequel le dispositif de réduction de NOx comprend en outre :
un moteur diesel auxiliaire (14), qui est approprié pour une utilisation de production d'énergie et étant prévu dans le navire en plus du moteur diesel principal (1), et qui est configuré pour émettre un gaz d'échappement à température supérieure à celle du moteur diesel principal (1), ladite température supérieure étant réglée pour dépasser la température à laquelle le catalyseur de réduction de NOx peut être régénéré,
une pluralité de passages communicants (16) qui relient respectivement un passage d'échappement (15) du moteur diesel auxiliaire (14) et la pluralité de passages d'embranchement (3) qui sont déviés depuis le passage principal de gaz d'échappement (2), dans lequel chacun desdits passages communicants (16) est doté d'une seconde soupape d'ouverture/fermeture (17) ;
un passage de contournement de gaz d'échappement à travers lequel le gaz d'échappement provenant du moteur diesel auxiliaire (14) contourne le catalyseur de réduction de NOx (12) et rejoint une sortie de gaz d'échappement (22) et sur lequel une soupape de contournement de gaz d'échappement (19) est prévue; et
un dispositif de commande (10) configuré pour commander les opérations d'ouverture et de fermeture des première (13) et seconde (17) soupapes d'ouverture/fermeture lorsqu'au moins un des catalyseurs de réduction de NOx (12) est à régénérer, de sorte que le gaz d'échappement à température supérieure émis depuis le moteur diesel auxiliaire (14) passe à travers ledit au moins un catalyseur de réduction de NOx (12) fourni au passage d'embranchement correspondant (3) par l'intermédiaire de la seconde soupape d'ouverture/fermeture correspondante (17), augmentant ainsi la température dudit au moins un catalyseur de réduction de NOx (12) à un niveau permettant la régénération dudit au moins un catalyseur de réduction de NOx (12).

2. Dispositif de réduction de NOx selon la revendication 1, comprenant en outre une pluralité de dispositifs de mesure de concentration de NOx (6a, 6b) respectivement prévus au niveau d'un côté entrée et d'un côté sortie de chacun des catalyseurs de réduction de NOx (12), dans lequel
le dispositif de commande (10) est configuré pour calculer une différence entre la valeur de concentration de NOx détectée par le dispositif de mesure de concentration de NOx côté entrée (6a) et la valeur de concentration de NOx détectée par le dispositif de mesure de concentration de NOx côté sortie (6b) de chaque catalyseur de réduction de NOx (12), et, lorsque la différence calculée est plus petite qu'une limite acceptable prescrite pour au moins un des catalyseurs de réduction de NOx (12), pour permettre à la seconde soupape d'ouverture/fermeture (17) correspondant audit au moins un catalyseur de réduction de NOx de s'ouvrir de sorte que le gaz d'échappement à température supérieure provenant du moteur diesel auxiliaire (14) passe à travers ledit au moins un catalyseur de réduction de NOX (12) pour réaliser la régénération dudit au moins un catalyseur de réduction de NOx.

3. Dispositif de réduction de NOx selon la revendication 1, comprenant en outre au moins un capteur de température de gaz d'échappement côté entrée (11) prévu au niveau d'un côté entrée des catalyseurs de réduction de NOx (12), et une pluralité de capteurs de température de gaz d'échappement côté sortie (8) respectivement prévus au niveau d'un côté sortie de chacun des catalyseurs de réduction de NOx (12) pour détecter la température avant et après chacun des catalyseurs de réduction de NOx (12), dans lequel
le dispositif de commande (10) est configuré pour calculer une différence entre la température détectée par le capteur de température côté entrée (11) et la température détectée par le capteur de température côté sortie (8) de chaque catalyseur de réduction de NOx (12), et lorsque la différence calculée est plus grande qu'une limite acceptable prescrite pour au moins un des catalyseurs de réduction de NOx (12), pour permettre à la seconde soupape d'ouverture/fermeture (17) correspondant audit au moins un catalyseur de réduction de NOx de s'ouvrir de sorte que le gaz d'échappement à température supérieure provenant du moteur diesel auxiliaire (14) passe à travers ledit au moins un catalyseur de réduction de NOx (12) pour réaliser la régénération dudit au moins un catalyseur de réduction de NOx (12).

4. Dispositif de réduction de NOx selon la revendication 1, comprenant en outre un compte-tours (21) pour compter le nombre de tours cumulés du moteur diesel principal (1), dans lequel
le dispositif de commande (10) est configuré pour permettre à la seconde soupape d'ouverture/fermeture (17) de s'ouvrir lorsque le nombre de tours cumulés compté, compté par le compte-tours (21), atteint un nombre de tours de régénération prescrit de sorte que le gaz d'échappement à température supérieure provenant du moteur diesel auxiliaire (14) passe à travers au moins un des catalyseurs de réduction de NOx (12) pour réaliser la régénération dudit au moins un catalyseur de réduction de NOx (12).

5. Dispositif de réduction de NOx selon la revendication 1, comprenant en outre un compte-tours (21) pour compter le nombre de tours cumulés du moteur diesel principal (1), dans lequel
le dispositif de commande (10) est configuré pour commander l'ouverture et la fermeture des première et seconde soupapes d'ouverture/fermeture (13, 17) prévues au niveau de chaque passage d'embranchement de gaz d'échappement à tour de rôle chaque fois que le compte-tours (21) compte un incrément de nombre de compte prédéfini; moyennant quoi, le dispositif de commande (10) permet aux secondes soupapes d'ouverture/fermeture (17) de s'ouvrir à tour de rôle de sorte que le gaz d'échappement à température supérieure provenant du moteur diesel auxiliaire (14) passe à travers les catalyseurs de réduction de NOx (12) à tour de rôle pour réaliser la régénération de ceux-ci.

6. Dispositif de réduction de NOx selon l'une quelconque des revendications précédentes, comprenant en outre un autre passage de contournement d'échappement (4) à travers lequel le gaz d'échappement à température inférieure provenant du passage principal (2) peut contourner les catalyseurs de réduction de NOx (12) dans la sortie de gaz d'échappement (22) ; une autre soupape de contournement (5) prévue dans ledit autre passage de contournement d'échappement (4) ; et une pluralité de passages de sortie de gaz d'échappement (7) pour évacuer le gaz provenant respectivement de chacun des catalyseurs de réduction de NOx (12), dans lequel chacun des passages de sortie de gaz d'échappement (7) rejoint la sortie de gaz d'échappement (22) avec ledit autre passage de contournement d'échappement (4).
